Europäisches Patentamt

European Patent Office

Office européen des brevets

(11) Publication number: **0 398 387 B1**

# EUROPEAN PATENT SPECIFICATION

(45) Date of publication of patent specification: **09.08.95**   (51) Int. Cl.⁶: **C09D 157/10**

(21) Application number: **90109637.0**

(22) Date of filing: **21.05.90**

The file contains technical information submitted after the application was filed and not included in this specification

(54) **High solids low VOC paint compositions.**

(30) Priority: **19.05.89 US 353996**

(43) Date of publication of application:
**22.11.90 Bulletin 90/47**

(45) Publication of the grant of the patent:
**09.08.95 Bulletin 95/32**

(84) Designated Contracting States:
**AT BE CH DE DK ES FR GB GR IT LI LU NL SE**

(56) References cited:
**EP-A- 0 029 598
US-A- 4 276 212
US-A- 4 548 963**

(73) Proprietor: **BASF Corporation
Inmont Division,
1255 Broad Street,
P.O. Box 6001
Clifton,
New Jersey 07015-6001 (US)**

(72) Inventor: **Shepler, Stewart
17111 Cross Creek
Bowling Green,
Ohio 43402 (US)**
Inventor: **Finkenauer, Horst J.**
7815 Noward Road
Waterville,
**Ohio 43566 (US)**
Inventor: **Braun, Jennifer
712 South River Road
Waterville,
Ohio 43566 (US)**
Inventor: **Bajc, Gerald L.
141 Phensont
Perrysburg,
Ohio 43551 (US)**

(74) Representative: **Münch, Volker, Dr. et al
BASF Lacke + Farben AG
Patente/Lizenzen/Dokumentation
Postfach 61 23
D-48136 Münster (DE)**

**Description**

FIELD OF THE INVENTION

The present invention relates to automotive paint compositions and more particularly to high solids low volatile organic content (VOC) solvent-borne automotive paint compositions.

Automotive solvent-borne paint compositions according to the present invention having high solids and low VOC content comprise basecoat formulations, clearcoat formulations and single stage topcoat formulations.

DESCRIPTION OF THE INVENTION

The present invention is directed to automotive paint compositions having a high solids content and low V.O.C. properties. These coatings have been found to exhibit excellent physical properties with short tack-free and dust-free time and excellent pot or shelf life.

While any substrate material can be coated with the coating compositions according to the present invention, including such things as glass, ceramics, paper, wood, and even plastic material depending on the specific drying and/or curing requirements of the particular composition, the coating system of the present invention is particularly adapted for metal substrates, and specifically as an automotive paint re-finish system. The substrate may also be bare substrate material or can be conventionally primed, for example to impart corrosion resistance. Exemplary material substrates include such things as steel, aluminium, copper, zinc, magnesium, alloys thereof. The components of the compositions can be varied to suit the temperature tolerance of the substrate material. For example, the components can be so constituted for air drying (i.e. ambient, low temperature cure (e.g. 100 F (38 °C) - 180 F (82 °C)), or high temperature cure, e.g., over 180 F (82 °C)).

The coating compositions of the present invention can be used as either pigmented topcoats or as the basecoat of pigmented basecoat/clearcoat topcoat multicoat coating compositions. It is preferred to use the coatings of the present invention as a pigmented topcoat. Although the pigmented topcoat coating is preferred, it will be appreciated that the coatings described herein can have utility as pigmented basecoat and as clearcoat.

When a clear coat is used containing the low VOC resin of the present invention it may be coated over any basecoat known to the art. When a basecoat containing the low VOC resin ist clearcoated with a low VOC or conventional resin, superior paint compositions are obtained.

The basecoat material, i. e. the pigmented polymer layer closest to the substrate, comprises any suitable film-forming material conventionally used in this art including acrylics, alkyd, polyurethanes, polyesters and aminoplast. The basecoat can be deposited out of an aqueous carrier, or out of conventional volatile organic solvents such as aliphatic, cycloaliphatic and aromatic hydrocarbons, esters, ethers, ketones and alcohols including such things as toluene, xylene, butyl acetate, acetone, methyl isobutyl ketone, and butyl alcohol. When using volatile organic solvents, although it is not required, it is preferred to include a conventional rheology control agent such as 2 % to 50 % by weight of a cellulose ester and/or wax (e. g., polyethlene) which facilitates quick release of the volatile organic solvent resulting in improved flow or leveling out of the coating. The cellulose esters used must be compatible with the particular resin systems selected and include such things as cellulose nitrate, cellulose propionate, cellulose butyrate, cellulose acetate butyrate, cellulose acetate propionate and mixtures thereof. The cellulose esters when used are preferably used in 5 % to 20 % by weight based on film forming solids.

Other types of rheology control agents conventional in this art include microparticles or microgels. These microgels or microparticles comprise polymer particles in a dispersed state.

Typically, 2 wt. % to 20 wt. % of solid vehicle of a microparticle dispersion is added to the basecoat formulation.

Microparticle or microgel dispersions, also known as nonaqueous dispersions, useful as rheology control agents in the basecoats of the present invention are disclosed in U.S. Pat. Nos. 3,365,414, 4,290,932, 4,377,661, 4,414,357, 4,447,536 which are incorporated by reference.

The acrylic resins in the basecoat may be either thermoplastic (acrylic lacquer systems) or thermosetting. Acrylic lacquers such as are described in U.S. Pat. No. 2,860,110 are one type of film forming composition useful according to this invention in the basecoat. The acrylic lacquer compositions typically include homopolymers of methyl methacrylate and copolymers of methyl methacrylates which contain among others, acrylic acid, methacrylic acid, alkyl esters of acrylic acid, alkyl esters of methacrylic acid, vinyl acetate, acrylonitrille, and styrene.

The low VOC coating composition useful to form the single stage topcoat formulation as well as the clearcoat and basecoat formulations are typically made from copolymer compositions as described and claimed in related copending U. S. application.

EP-A-29598 and US-A-4,276,212 disclose high solid coating compositions comprising a copolymer consisting of an alkyl methacrylate, a hydroxyalkyl (meth)acrylate and optionally an alkyl acrylate or styrene wherein said copolymer has a number average molecular weight of 500 to 10,000 and a glass transition temperature between -20 to + 20°C.

US-A-4,548,963 describes high solids coating compositions comprising a copolymer which has a number average molecular weight of 1,000 to 5,500 and which has been prepared from a monomer blend comprising a hydroxy alkyl ester of acrylic or methacrylic acid, at least one glycidic monomer and at least one ethylenically unsaturated monomer polymerizable with the hydroxy alkyl ester and the glycidic monomer.

US-A-4,397,989 discloses high solids coating compositions comprising an acrylic polymer with a number average molecular weight of 500 to 20,000 and a glass transition temperature of 0 to 30°C.

None of these documents EP-A-29598, US-A-4,276,212, US-A-4,548,963 and US-A-4,397,989 discloses a copolymer consisting of the polymerization product of ethylenically unsaturated monomers containing vinyl monomers wherein at least one of the vinyl monomers is acid functional and wherein the copolymer is subsequently or in situ reacted to the glycidic ester of Versatic 10 carboxylic acid through organic acid groups.

US-A-4,245,074 and EP-A-295784 disclose high solids coating compositions comprising a low molecular weight acrylic copolymer which could be Cardura modified. US-A-4,245,074 and EP-A-295784 do not explicitly indicate the Tg value of the copolymers. The copolymers disclosed in D4 and D5 contain large amounts of Cardura E and acrylic acid resulting in significantly lower Tg values.

US-A-3,549,583 discloses a coating composition comprising a Cardura modified copolymer. The Tg value and the molecular weight of the copolymers are not explicitly indicated in this document.

Finally GB-B-1,515,868 discloses a high solids coating composition containing a hydroxyl-containing polymer with a number average molecular weight of about 500 to 2,000. The Tg value of the copolymers is not explicitly incidated in GB-B-1,515,868.

Furthermore Gb-B-1,515,868 precludes the use of chain transfer agents for the polymerization of the polymers.

According to the present invention, are disclosed high solids Low VOC basecoats, clearcoats and single stage topcoats comprising 25 to 50 percent copolymer, 10 to 30 percent solvent, and 10 to 30 percent percent crosslinking agent and 1 to 10 percent additives such as accelerators, mar and slip agents, flow modifiers, anti-settle agents, pigment wetting agents, ultraviolet light absorbers and stabilizers. 0 to 35 percent pigments and extenders may also be used.

Copolymers which, when crosslinked with isocyanate or non-isocyanate crosslinker, form coatings, which have excellent physical properties with short tack-free and dust-free time, excellent pot-life, and no strong mercaptan odor.

The said copolymer has a glass transition temperature between -3°C to 35°C and a relative weight average molecular weight of 1,000 - 7,000 based on GPC using polystyrene standards. The copolymer has been prepared by reacting the polymerization product of

499 parts (21,2% by weight) of n-butyl methacrylate

674 parts (28,6% by weight) of styrene

302 parts (12,8% by weight) of hydroxyethyl methacrylate

188 parts (8,0% by weight) of acrylic acid

82,5 parts (3,5% by weight) of 2-mercaptoethanol and

40,5 parts (1,7% by weight) of 1,1'-azobis (cyanocyclohexane)

subsequently to 572 parts (24,2% by weight) of the glycidyl ester of Versatic 10 carboxylic acid through the organic acid groups of the acrylic acid.

Solvent of utility in the coatings are those commonly used in the art. These solvents include but are not limited to toluene, xylene, ethanol, isopropanol, n-butanol, 2-butanol, methyl ethyl ketone, methyl amyl ketone, methyl isobutyl ketone, amyl acetate, n-butyl acetate, propylene glycol monomethyl ether acetate, ethylene glycol butyl ether acetate, 3-methoxy n-butyl acetate, ethylene glycol butyl ether, diethylene glycol butyl ether.

Especially preferred are methyl ethyl ketone, methyl amyl ketone, methyl isobutyl ketone, n-butyl alcohol, toluene, xylene, propylene gylcol monomethyl ether acetate, 3-methocy n-butyl acetate, ethylene glycol butyl ether acetate and ethanol.

Both isocyanate and non-isocyanate crosslinking agents may be used in these coatings compositions. Crosslinking agents of utility in these coatings are those commonly used in the art. They include but are not limited to biurets, isocyanurates or adducts of toluene diisocyanate, hexamethylene diisocyanate, isophorone diisocyanate and meta-tetramethyl xylene. Reaction products of melamine or urea and formaldehyde and various alcohols containing up to and including four carbon atoms. This includes partially alkylated melamine-formaldehyde resins and fully alkylated aminoplast of a low imino content such as Monsanto Resimene RF4518. Also finding utility when used with the non-isocyanate crosslinking agents are ketone and aldehyde modifying resins which include but are not limited to BASF Laropal A81, Laropal K80; Huls America Synthetic resin AP, Synthetic resin H, and Synthetic resin BL 1201 and ICI Lumiflon LF-916.

Especially preferred are 1,6 hexamethylene diisocyanate isocyanate, isophorone diisocyanate isocyanurate, Monsanto Resimene RF4518, BASF Laropal A81 and ICI Lumiflon LF-916.

Additives of utility in these coatings are those commonly used in the art. Mar and slip agents and defoamers which find utility included but are not limited to Byk 304, Byk 306, Byk 307, Byk 325, Byk 341, Dow Corning #7, Dow Corning #54, Dow Corning #200, General Electric SF-69, Tego Glide 410, Mobay OL44, especially preferred is Byk 307.

Also finding utility are cure accelerators which include but are not limited to organic-metallic compounds such as dibutyltindioxide, dibutyltindilaurate, zinc octoate; amine compounds such as triethylamine, 2-diethylaminoethanol, triethylene diamine; organic acids such as p-toluene sulfonic acid, dinonylnapthalene disulfonic acid and dibutyl sulfonic acid. Especially preferred are dibutyltindilaurate, 2-diethylaminoethanol and p-toluene sulfonic acid.

Also finding utility are flow and rheology modifying agents which include but are not limited to synthetic amorphos hydrophobic silica such as Degussa Aerosil R972, synthetic amorphos hydrophillic silica Degussa Aerosil 200, organo clays, polyethylene wax dispersions, polypropylene wax dispersions, polyamid wax dispersions, ethylene vinyl acetate wax dispersions. Agents such as Byk Chemie Anti-terra 202, Anti-terra 204, Anti-terra V, Byk W-960, Byk R-405, Byk P-104, Byk P-104s; Troy Chemical Troythix Antisag4, Troythix Antisettle; Raybo Chemical Raybo 6, Raybo 94, and Tego Chemie ZFS 460. Especially preferred are Degussa Aerosil R972, Byk W960 and Byk R405.

Also finding utility are pigment wetting and dispersing aids which include but are not limited to ICI Solsperse hyperdispersants such as Solsperse 5000, 12000, 20000, 22000 and 24000; Troy Chemical Troysol CD1, Troysol CD2 and Troysol 98C; Daniel Products DispersAyd 9100; Raybo Chemical Raybo 63; Byk Chemie Anti-terra U, Anti terra 202, Byk W-960, Byk P-104 Disperbyk 160, Disperbyk 162, Disperbyk 163; Nuodex Nuosperse 657, Nuosperse 700. Especially preferred is Disperbyk 163.

Also finding utility in these coatings are ultraviolet light absorbers and stabilizers which include but are not limited to Sandoz Chemicals Sanouvor 3206, Sanduvor VSU, Sanduvor 3050; Ciba Geigy Corp. Tinuvin 292, Tinuvin 328, Tinuvin 440, Tinuvin 900, Tinuvin 1130. Especially preferred are Tinuvin 292 and Tinuvin 1130.

Also finding utility in these coatings are various types pigments common to the art which inlcude but are not limited to Titanium Dioxide, phthalocyanine blue, phthalocyanine green, carbon black guinacridone, carbizole violet, isoindolinone, pyrrolopyrrol, isoindolin, azomethine, anthraquinone, lead chromate molybdate, lead sulfa chromate, ferric oxides, magnesium silicates, and aluminum. Especially preferred are Dupont Ti-Pure Titanium Dioxide and Mobay B-4730 phthalocyanine blue, Toyo 7130 N aluminum, Hoechst Novoperm Red F2RK-70 and Hoechst Permanent Yellow HR-70.

The following examples are given to illustrate utilities of the low VOC coatings, according to the present invention.

EXAMPLE I

PART A

A mixture of 387 gms. methyl amyl ketone and 55 gms. of methyl ethyl ketone was placed in a flask fitted with agitator, three addition feed pumps, reflux condenser, thermocouple probe and inert gas inlet. The flask was purged with nitrogen and the mixture was heated to reflux (about 125-131 C) with stirring, while a slow stream of nitrogen was passed through the system.

4

PART B

Each of the following was concurrently added over about 150 minutes:
1) a premixed monomer solution of 499 gms. normal butyl methacrylate, 674 gms. styrene, 302 gms. hydroxy ethyl methacrylate, 188 gms. glacial acrylic acid, and 25 gms. of methyl amyl ketone.
2) a premixed suspension/solution of 26.4 gms. (1,1′-azobis(cyanocyclohexane)) and 152 gms. methyl ethyl ketone.
3) a premixed solution of 82.5 gms. 2-mercaptoethanol and 50 gms. of methyl amyl ketone.

Part C

The polymerization was carried out at reflux with the temperature dropping throughout the addition to about 121-124 C. Subsequently 37 gms. of methyl amyl ketone was used to flush the lines used for 1 and 3 above; a premixed mixture of 14.1 gms. 1,1'-azobis-cyanocyclohexane and 82 gms. methyl ethyl ketone was added over approximately 60 minutes with temperature continuing to fall to 114 C.

Part D

Subsequently, the material was held about 10 minutes at 110-115 C, the flask was equipped with a Barret trap, and solvent stripped out to a temperature above 136 C, after which the heat was turned off, 572 gms. of Cardura E-10 (glycidyl ester of Versatic 10 carboxylic acid) and 5 gms. of methyl amyl ketone were aded. Heat was again applied and the mixture heated to reflux (about 150-151 C) and held at reflux for three hours.

The properties of the resin were 79-80 % non-volatile using the time, temperature, and sample weight according to ASTM 2369; 8-9 acid number based on the above-non-volatile; a viscosity of K-L when reduced to 66.4 % weight non-volatile with methyl ethyl ketone; and weight average relative molecular weight of approximately 3948 (GPC based on polystyrene standards).

**Example II**

A topcoat was prepared as follows: To 360 grams of the 75 % copolymer in Example I was added 7,0 grams of Byk W 960,40.0 grams of methyl ethyl ketone, 40.0 grams of methyl amyl ketone and 560.0 grams of Dupont Ti-Pure R-960 Titanium Dioxide pigment. This mixture was mixed with a high speed disc impeller until homogenous. This mixture was then placed in a batch small media mill and dispersed to a grind fineness of 5-10 microns (5-10 $\mu$m). To this mixture was added 167 grams of the 75 % copolymer in Example I, 103.0 grams of methyl ethyl ketone, 43.0 grams of methyl amyl ketone, 3.56 grams of 2-diethylaminoethanol, 0.73 grams of Byk 307, and 0.046 grams of dibutyltindilaurate. To 500 grams of this mixture was added 53.1 grams of 1,6-hexamethylene diisocyanate isocyanurate, 56.4 grams of isophorone diisocyanate isocyanurate, 12.1 grams of xylene, 12.1 grams of propylene glycol monomethyl ether acetate, 18.3 grams of 3 methoxy n-butyl acetate, 19.2 grams of toluene and 11.9 grams of butyl cellosolve acetate.

The resultant topcoat contains approximately 405 grams per liter volatile organic compounds at an application viscosity of 17-22 seconds as measured on a #4 Ford viscosity cup.

**Example III**

A topcoat was prepared as follows: To 700.0 grams of the 75 % copolymer in Example I was added 54.0 grams of Disperbyk 163, 27.0 grams of methyl ethyl ketone, 27.0 grams of methyl amyl ketone and 162.5 grams of Mobey B-4730 phthalo blue pigment. This mixture was then placed in a small media mill and dispersed to a grind fineness of 5-10 microns (5-10 $\mu$m). To this mixture was added 708.3 grams of the copolymer in Example I, 254.9 grams of methyl ethyl ketone, 86.0 grams of methyl amyl ketone, 9.5 grams of 2-diethylaminoethanol, 1.94 grams of Byk 307, 0.12 grams dibutyltindilaurate. To 500 grams of this mixture was added 75.3 grams of 1,6-hexamethylene diisocyanate isocyanurate, 79.9 grams of isophorone diisocyanate isocyanurate, 17.1 grams of xylene, 17.1 grams of propylene glycol monomethyl ether acetate, 27.3 grams of toluene, 26.0 grams of 3 methoxy n-butyl acetate and 16.9 grams of butyl cellosolve acetate.

The resultant topcoat contains approximately 410 grams per liter of volatile organic compounds at an application viscosity of 17 to 35 seconds on a #4 Ford viscosity cup.

EXAMPLE IV

A topcoat was prepared as follows: To 366.7 grams of the 75% copolymer in Example I was added 70.0 grams of methyl ethyl ketone, 21.8 grams of methyl amyl ketone, 38.5 grams of Toyo aluminum 713ON, 2.50 grams of 2-diethylaminoethanol, 0.5 grams of Byk 307 and 0.032 grams of dibutyltindilaurate. This mixture was mixed with an air motor until homogenous. To this mixture was added 75.3 grams of 1,6-hexamethylene diisocyanate isocyanurate, 79.9 grams of isophorone diisocyanate isocyanurate, 17.1 grams of xylene, 17.1 grams of propylene glycol monomethyl ether acetate, 26.0 grams of 3 methoxy n-butyl acetate, 27.2 grams of toluene and 16.9 grams of butyl cellosolve acetate.

The resulting topcoat contains approximately 410 grams per liter volatile organic compounds at application viscosity of 17-35 seconds on the #4 Ford cup.

**Example V**

A basecoat was prepared as follows: To 333.3 grams of the 75 % copolymer in Example I was added 63.0 grams of methyl ethyl ketone, 24.0 grams of methyl amyl ketone, 77.0 gams of Toyo aluminium 713ON, 2.25 grams of 2-diethylaminoethanol, 0.46 grams of Byk 307 and 0.029 grams of dibutyltindilaurate. This mixture was mixed with an air motor until homogenous. This mixture will be referred to as part A. To 353.0 grams of copolymer was added 56.0 grams of methyl ethyl ketone, 56.0 grams of methyl amyl ketone and 35.0 grams of Degussa Aerosil R972. This mixture was mixed on a high speed disc impeller until homogenous. This mixture was then placed in a small media mill and dispersed to a grind fineness of 10-15 microns (10-15 $\mu$m). This mixture will be referred to as Part B. To 500.0 grams of Part A was added 15.0 grams of Part B, 0.3 grams of Byk R405, 77.3 grams of 1,6-hexamethylene diisocyanate isocyanurate, 82.1 grams of isophorone diisocyanate isocyanurate, 17.6 grams of xylene, 17.6 grams of propylene glycol monomethyl ether acetate, 26.7 grams of 3 methoxy-n-butyl acetate, 28.0 grams of toluene and 17.3 grams of butyl cellosolve acetate.

The resulting basecoat contains approximately 410 grams per liter volatile organic compounds at an application viscosity of 17-35 seconds on the #4 Ford cup.

EXAMPLE VI

A clearcoat was prepred as follows: To 375.0 grams of the copolymer in Example I was added 75.8 grams of methyl ethyl ketone, 30.0 grams of methyl amyl ketone, 2.62 grams of 2-diethylaminoethanol. 0.53 grams of Byk 307, 0.034 grams of dibutyltindilaurate, 9.0 grams of Ciba-Geigy Tinuvin 292, 7.0 grams of Ciba-Geigy Tinuvin 1130, 76.0 grams of 1,6-hexamethylene diisocyanate isocyanurate, 80.7 grams of isophorone diisocyanate isocyanurate, 17.3 grams of xylene, 17.3 grams of propylene glycol monomethyl ether acetate, 26.2 grams of 3 methoxy n-butyl acetate, 27.5 grams of toluene and 17.0 grams of butyl cellosolve acetate.

The resulting clearcoat has a volatile organic content of approximately 400 grams per liter at a spray viscosity of 17-35 seconds on the Ford #4 cup.

**Example VII**

A topcoat was prepared as follows: To 360.0 grams of the 75 % copolymer in Example I was added 7.0 grams of BYK W-960, 40.0 grams of methyl ethyl ketone, 40.0 grams of methyl amyl ketone and 560.0 grams of Dupont Ti-Pure R-960 titanium dioxide pigment. This mixture was mixed with a high speed disc impeller with homogenous. This mixture was then placed in a batch small media mill and dispersed to a grind fineness of 5-10 microns (5-10 $\mu$m). To this mixture was added 631.4 grams of the 75 % copolymer in Example I.

To 500.0 grams of this mixture was added, 60.0 grams of BASF Laropal A81, 150.0 grams of n-butyl alcohol, 40.0 grams of toluene, 98.0 grams of Monsanto RF-4518 and 8.0 grams of p-toluene sulfonic acid.

EXAMPLE VIII

A clearcoat was prepared as follows: To 223.2 grams of the copolymer in Example I was added 47.1 grams of BASF Laropal A81, 121.5 grams of n-butyl alcohol, 25.0 grams of toluene, 76.8 grams of Monsanto RF-4518 and 6.4 grams of p-toluene sulfonic acid.

# Example IX

**The following table lists various physical properties of the coatings of Example II - VIII**
**at approximately 2 mils (50,8 µm) dry film thickness**

| | II | III | IV | V | VI | VII | VIII |
|---|---|---|---|---|---|---|---|
| Catalyzed Pot Life @ 77° F (25 °C) | 4-5 hours | 4-5 hours | 4-5 hours | 4-5 hours | 4-5 hours | 4-5 hours | 4-5 hours |
| Dust free @ 77°F (25° C) | 30'-45' | 30'-45' | 30'-45' | 30'-45' | 45'-60' | 20'-30' | 20'-30' |
| Tack free @ 77°F (25 °C) | 3.4-4.5 hrs. | 3.5.-4.5 hrs. | 3.5-4.5 hrs. | 3.5-4.5 hrs. | 3.5.-4.5 hrs. | 60'-75' | 60'-75' |
| Water Spot | Excell. | Excell. | Excell. | Excell. | Excell. | Excell. | Excell. |
| Gas Soak Resistance | 4-5d | 4-5d | 4.5d | 4-5d | 4-5d | 7-14d | 7-14d |
| Solids | 67.5-68.5 | 59.5-60.5 | 59.5-60.5 | 59.5-60.5 | 60.0-61.0 | 60.0-61.0 | 52.0-53.0 |
| V.O.C | 405 | 410 | 410 | 410 | 400 | 440 | 460 |
| Paint Stability @ 140° F (60°C)/14 days | No settle No Strength Change | No settle No Strength Change | No settle | No settle | No change | No settle | No change |
| Gloss | 88-92 | 88-92 | 83-88 | 83-88 | 88-92 | 80-85 | 85-90 |
| 7 days Air Dry | 95-100 | 95-100 | 80-90 | 80-90 | 95-100 | 80-90 | 80-90 |
| Adhesion to Epoxy Primer | Excell. | Excell. | Excell. | Excell. | Excell. | Excell. | Excell. |
| Pendulum hardness König overnight air dry | 68" | 65" | 70" | | 75" | 80" | 80" |

The resultant clearcoat contains approximately 415.0 grams per liter of volatile organic compounds at an application viscosity of 17-35 seconds on the Ford #4 cup.

EP 0 398 387 B1

EXAMPLE X

A clearcoat was prepared as follows: To 245.6 grams of the 79% N.V. copolymer in Example I was added 53.1 grams ethanol, 88.5 grams methyl isobutyl ketone, 3.7 grams N-butyl acetate, 73.7 grams Monsanto RF-4518 and 16.8 grams para-toluene sulfonic acid.

The resultant clearcoat contains approximately 415 grams per liter of volatile organic compounds.

EXAMPLE XI

A clearcoat was prepared as follows: To 147.8 grams of the 79% N.V. copolymer in Example I was added 41.7 grams ICI Lumiflon LF-916, 35.8 grams ethanol, 55.4 grams methyl isobutyl ketone, 1.6 grams N-butyl acetate, 51.3 grams Monsanto RF-4518 and 11.7 grams paratoluene sulfonic acid.

The resultant clearcoat contains approximately 417 grams per liter of volatile organic compounds.

## Example XII

A topcoat was prepared as follows: To 261.5 grams of the 79 % N.V. copolymer in Example I was added 19.5 grams Hoechst Celanese 13-3072 Novaperm Red F2RK-70, 9.9 grams Hoechst Permanent Yellow HR-70 and 40.0 grams N-butyl acetate. This mixture was placed in a plastic bottle with 400 grams of glass media and placed on a shaker for 90 minutes to achieve a grind fineness of 5-10 microns (5-10 $\mu$m). To this mixture was added 72.1 grams on the 79 % N.V. copolymer in Example 1. This mixture is referred to as Part A.

To 200 grams of part A add 29.9 grams ethanol, 50.0 grams methyl isobutyl ketone, 2.1 grams N-butyl acetate, 49.7 grams Monsanto RF-4518 and 11.3 grams para-toluene sulfonic acid.

The resulting topcoat contains approximately 411 grams per liter volatile organic compounds.

## Claims
## Claims for the following Contracting States : AT, BE, CH, DE, DK, FR, GB, IT, LI, LU, NL, SE

1. A substrate overcoated with a high solids composition wherein said composition comprises from 25 to 50 percent copolymer, 10 to 30 percent solvent, 10 to 30 percent crosslinking agent and 1 to 10 percent additives, wherein said copolymer has a glass transition temperature between -3°C to 35°C and a relative weight average molecular weight of 1,000 - 7,000 based on GPC using polystyrene standards and wherein the copolymer has been prepared by reacting the polymerization product of
21,2% by weight of n-butyl methacrylate
28,6% by weight of styrene
12,8% by weight of hydroxyethyl methacrylate
8,0% by weight of acrylic acid
3,5% by weight of 2-mercaptoethanol and
1,7% by weight of 1,1'-azobis(cyanocyclohexane)
subsequently to 24,2% by weight of the glycidyl ester of Versatic 10 carboxylic acid through the organic acid groups of the acrylic acid.

## Claims for the following Contracting States : ES, GR

1. A process for overcoating a substrate with a high solids composition wherein said composition comprises from 25 to 50 percent copolymer, 10 to 30 percent solvent, 10 to 30 percent crosslinking agent and 1 to 10 percent additives, wherein said copolymer has a glass transition temperature between -3°C to 35°C and a relative weight average molecular weight of 1,000 - 7,000 based on GPC using polystyrene standards and wherein the copolymer has been prepared by reacting the polymerization product of
21,2% by weight of n-butyl methacrylate
28,6% by weight of styrene
12,8% by weight of hydroxyethyl methacrylate
8,0% by weight of acrylic acid
3,5% by weight of 2-mercaptoethanol and
1,7% by weight of 1,1'-azobis(cyanocyclohexane)
subsequently to 24,2% by weight of the glycidyl ester of Versatic 10 carboxylic acid through the organic acid groups of the acrylic acid.

**Patentansprüche**
**Patentansprüche für folgende Vertragsstaaten : AT, BE, CH, DE, DK, FR, GB, IT, LI, LU, NL, SE**

1. Substrat, das mit einem Überzug aus einer festkörperreichen Zusammensetzung lackiert ist, wobei die Zusammensetzung aus 25 bis 50% Copolymer, 10 bis 30% Lösungsmittel, 10 bis 30% Vernetzungsmittel und 1 bis 10% Zusatzstoffen besteht, wobei das Copolymer eine Glasumwandlungstemperatur zwischen -3°C und 35°C und ein mittels GPC unter Verwendung eines Polystyrolstandards bestimmtes gewichtsmittleres Molekulargewicht von 1000 - 7000 aufweist und wobei das Copolymer durch Umsetzung des Polymerisationsprodukts aus
   21,2 Gew.-% n-Butylmethacrylat
   28,6 Gew.-% Styrol
   12,8 Gew.-% Hydroxyethylmethacrylat
   8,0 Gew.-% Acrylsäure
   3,5 Gew.-% 2-Mercaptoethanol und
   1,7 Gew.-% 1,1'-Azobis(cyancyclohexan)
   mit 24,2 Gew.-% des Glycidylesters von 10-Versatsäure mittels der organischen Säuregruppen der Acrylsäure hergestellt wurde.

**Patentansprüche für folgende Vertragsstaaten : ES, GR**

1. Verfahren zum Lackieren eines Substrats mit einem Überzug einer festkörperreichen Zusammensetzung, die aus 25 bis 50% Copolymer, 10 bis 30% Lösungsmittel, 10 bis 30% Vernetzungsmittel und 1 bis 10% Zusatzstoffen besteht, wobei das Copolymer eine Glasumwandlungstemperatur zwischen -3°C und 35°C und ein mittels GPC unter Verwendung eines Polystyrolstandards bestimmtes gewichtsmittleres Molekulargewicht von 1000 - 7000 aufweist und wobei das Copolymer durch Umsetzung des Polymerisationsprodukts aus
   21,2 Gew.-% n-Butylmethacrylat
   28,6 Gew.-% Styrol
   12,8 Gew.-% Hydroxyethylmethacrylat
   8,0 Gew.-% Acrylsäure
   3,5 Gew.-% 2-Mercaptoethanol und
   1,7 Gew.-% 1,1'-Azobis(cyancyclohexan)
   mit 24,2 Gew.-% des Glycidylesters von 10-Versatsäure mittels der organischen Säuregruppen der Acrylsäure hergestellt wurde.

**Revendications**
**Revendications pour les Etats contractants suivants : AT, BE, CH, DE, DK, FR, GB, IT, LI, LU, NL, SE**

1. Substrat recouvert d'une composition à forte teneur en matières solides, dans lequel ladite composition comprend de 25 à 50 pour-cent de copolymère, de 10 à 30 pour-cent de solvant, de 10 à 30 pour-cent d'agent de réticulation et de 1 à 10 pour-cent d'additifs, dans lequel ledit copolymère possède une température de transition vitreuse comprise entre -3°C et 35°C et une masse moléculaire moyenne en poids relative de 1 000-7 000, déterminée par une CPG employant des étalons polystyrènes, et dans lequel le copolymère a été préparé par réaction du produit de polymérisation de
   21,2% en poids de méthacrylate de n-butyle
   28,6% en poids de styrène
   12,8% en poids de méthacrylate d'hydroxyéthyle
   8,0% en poids d'acide acrylique
   3,5% en poids de 2-mercaptoéthanol et
   1,7% en poids de 1,1'-azobis(cyanocyclohexane)
   puis de 24,2% en poids de l'ester glycidylique d'acide carboxylique Versatic 10 par les groupes acides organiques de l'acide acrylique.

**Revendications pour les Etats contractants suivants : ES, GR**

1. Procédé pour recouvrir un substrat d'une composition à forte teneur en matières solides, dans lequel ladite composition comprend de 25 à 50 pour-cent de copolymère, de 10 à 30 pour-cent de solvant, de 10 à 30 pour-cent d'agent de réticulation et de 1 à 10 pour-cent d'additifs, dans lequel ledit copolymère possède une température de transition vitreuse comprise entre -3°C et 35°C et une masse moléculaire moyenne en poids relative de 1 000-7 000, déterminée par une CPG employant des étalons polystyrènes, et dans lequel le copolymère a été préparé par réaction du produit de polymérisation de

21,2% en poids de méthacrylate de n-butyle

28,6% en poids de styrène

12,8% en poids de méthacrylate d'hydroxyéthyle

8,0% en poids d'acide acrylique

3,5% en poids de 2-mercaptoéthanol et

1,7% en poids de 1,1'-azobis(cyanocyclohexane)

puis de 24,2% en poids de l'ester glycidylique d'acide carboxylique Versatic 10 par les groupes acides organiques de l'acide acrylique.